# FASCICULE DE BREVET EUROPEEN

(11) **EP 1 022 240 B1**
(45) Date de publication et mention de la délivrance du brevet: **02.04.2003**
(21) Numéro de dépôt: 00400191.3
(22) Date de dépôt: 25.01.2000
(51) Int. Cl.: B65G 67/54, B65G 67/24, B65G 67/40

(54) **Portique de securite pour pont basculeur**
Sicherheitsportal für Brückenkipper
Safety gantry for bridge tipper

(30) Priorité: 25.01.1999 FR 9900753
(43) Date de publication de la demande: 26.07.2000
(73) Titulaire: La Routière de l'Est Parisien R.E.P., 95190 Goussainville (FR)
(72) Inventeur: Rochon, Marcel, 95190 Goussainville (FR)
(74) Mandataire: Lhuillier, René

(56) Documents cités:
- DE-B- 1 204 589
- DE-B- 1 207 873

## Description

L'invention se situe dans le domaine technique des ponts basculeurs, notamment destinés à des camions-bennes chargés de produits en vrac à déverser d'un quai de rupture de charge, et elle concerne plus précisément un portique de sécurité associé au pont basculeur.

La technique du pont basculeur pivotant sur un axe transversal à l'extrémité du pont, sous l'action de vérins, est connue et utilisée pour la première fois en bordure d'un quai de rupture de charge pour les ordures ménagères et déchets industriels banals afin de supporter un camion et décharger sa benne des produits en vrac qu'il contient. Le châssis arrière du camion ou de la benne vient en butée contre un heurtoir au niveau de l'axe de pivotement, le heurtoir ayant pour fonction de retenir le camion quand le pont se soulève. Pour parfaire et sécuriser le maintien d'un camion ou d'un tracteur et sa remorque, sur le pont pivotant au cours de sa montée, il est habituel d'ancrer les roues du véhicule aux longerons du pont, à l'aide de sangles ou de chaînes. On évite ainsi le ripage latéral du camion, provoqué éventuellement lors de la montée du pont, par les vibrations induites ou par un déséquilibre dans la poussée des vérins latéraux.

Cette opération d'ancrage est malheureusement longue et fastidieuse, et de surcroît risquée dans la mesure où le personnel peut oublier d'assurer une ou des opérations d'ancrage avec les conséquences que l'on peut imaginer.

Le document DE-A-1 207 873 décrit un portique de sécurité pour pont basculeur comprenant des éléments réglables formant des butées qui sont liés au portique pour limiter au moins le déplacement de la benne.

Le demandeur a donc créé et mis au point un dispositif qui évite ces inconvénients, qui est simple et rapide à mettre en oeuvre, permettant de limiter le temps d'immobilisation du véhicule sur le pont, et qui offre toute garantie de sécurité.

L'invention a donc pour objet un portique de sécurité pour pont basculeur recevant notamment un semi-remorque ou camion-benne chargé de produits en vrac à déverser d'un quai de rupture de charge, ou de tout autre endroit, lequel portique est articulé sur les longerons du pont basculeur sensiblement au niveau de l'avant du véhicule et pivote sous l'action de vérins pour coiffer au moins une partie de la benne. Des éléments réglables formant des butées sont liés au portique pour limiter au moins le déplacement latéral de la benne.

Plus précisément, les vérins sont articulés sur un cadre déplaçable solidaire des longerons et tourillonnent sur les jambes du portique, sensiblement au tiers de sa hauteur.

Selon une caractéristique particulière de l'invention, les éléments réglables sont des butées montées sur la traverse supérieure du portique et des cales latérales, réglables en largeur, montées en partie haute sur les jambes du portique et orientées vers l'intérieur.

Des caractéristiques particulières et avantages de l'invention ressortiront de la description qui va suivre d'un exemple de réalisation dans lequel il sera fait référence aux dessins annexés qui représentent :
Figure 1, une vue en élévation d'un pont basculeur et du portique de sécurité en position repos,
Figure 2, une vue en élévation selon la figure 1 montrant le portique en position abaissée,
Figure 3, une vue en bout du pont et du portique,
Figure 4, une vue en perspective du pont en position basculée.

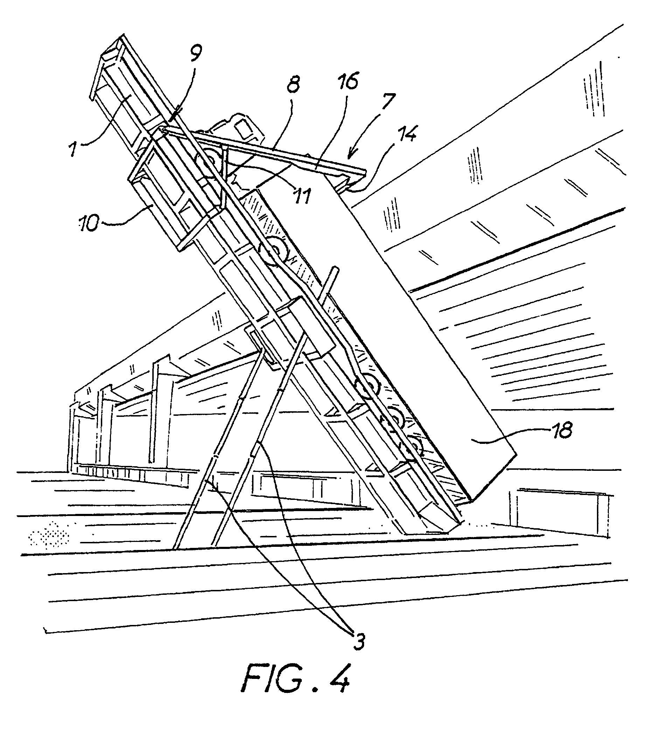

Le pont basculeur 1 montré sur les figures est encastré dans un quai de rupture de charge 2, en bordure d'une fosse de déchargement 4. Le pont pivote autour d'un axe transversal 5 en limite de la fosse. Il est soulevé par une paire de vérins 3 visibles sur la figure 4. Un heurtoir 6 à la verticale de l'axe 5 retient la benne 18 lors de la levée du pont.

A l'entrée du pont basculeur 1, les jambes 8 d'un portique 7 en U sont articulées à leurs extrémités, selon des axes 9, sur un cadre 10 fixé sous les longerons du pont. Le portique se trouve ainsi sensiblement au niveau de l'avant du véhicule. Une paire de vérins 11 sont également articulés à l'autre extrémité du cadre selon des axes 12 ; les tiges 13 de ces vérins tourillonnent par des axes 17 sur les jambes 8 du portique, sensiblement au tiers de sa hauteur. La traverse supérieure 14 du portique est équipée de butées 15 préférentiellement en matière élastomère, réglables en position et en épaisseur. En partie haute les jambes 8 sont munies de cales latérales 16 orientées vers l'intérieur du portique. Les cales sont réglables en hauteur sur le portique et en largeur par rapport aux jambes, ce qui permet donc de modifier leur écartement l'une vis-à-vis de l'autre. En variante, elles pourraient être constituées de coussins gonflables.

En variante de réalisation, le cadre 10 et le portique 7 qui lui est associé, est déplaçable le long du pont 1 de telle sorte qu'on puisse l'amener au niveau de la cabine ou du tracteur. Le portique est donc utilisable quelle que soit la hauteur et la longueur du camion

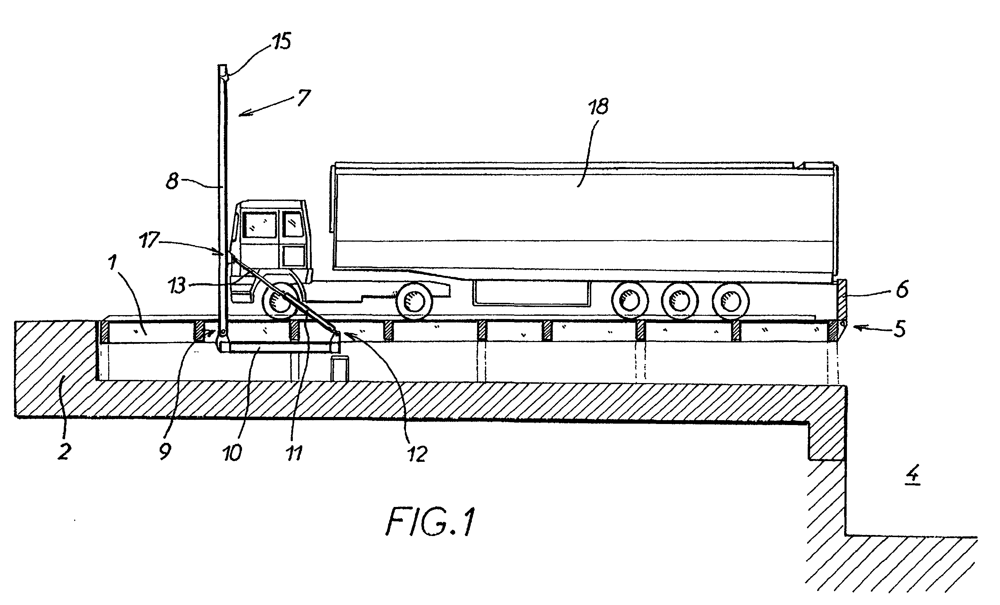

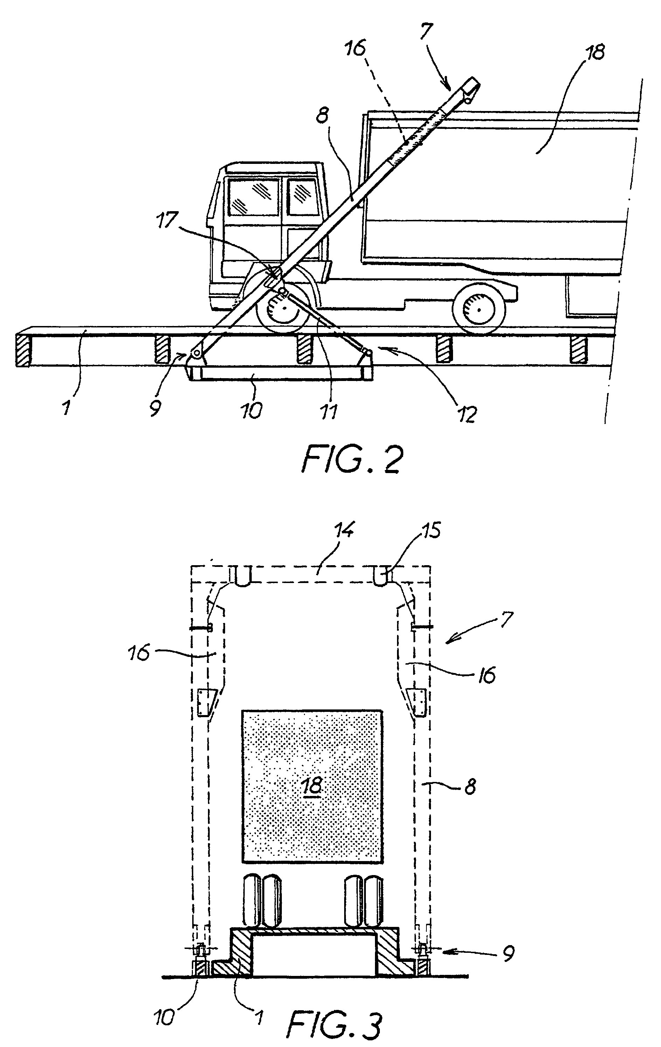

Ce réglage préalable étant fait le conducteur recule le camion sur le pont 1 jusqu'à ce que l'arrière du véhicule ou de la benne vienne en butée contre le heurtoir 6 (figure 1). Le conducteur descend et agit dans un premier temps sur un boîtier de commande extérieur pour le déploiement des vérins 11. La rétractation des tiges 13 fait basculer le portique 7 de la position initiale verticale vers une position inclinée comme le montre la figure 2. De ce fait le portique coiffe au moins une partie de la benne 18 et les cales latérales 16 se positionnent le long des flancs de la benne. En agissant sur leur positionnement en hauteur le long des jambes 8 du portique, ou sur leur écartement, on fait en sorte qu'elles soient en appui ou à proximité immédiate d'une extrémité de la benne qui est ainsi maintenue latéralement. Parallèlement, les butées hautes 15 du portique peuvent limiter le basculement de la benne vers le haut.

Le portique de sécurité étant mis en place, il ne reste plus qu'à commander la levée du pont basculeur 1 à l'aide des vérins 3. Le pont peut atteindre une inclinaison maximum telle qu'illustrée à la figure 4, pour laquelle tous les produits en vrac sont déversés dans la fosse 4. La benne 18 en appui sur le heurtoir 6 est maintenue latéralement par le portique 7. On voit que la mise en place du camion et du portique en position de sécurité sont des opérations rapides, aisées et sûres qui ne nécessitent pas de verrouillage des roues sur le pont.

## Revendications

1. Portique de sécurité pour pont basculeur recevant un camion-benne ou tout type de véhicule routier chargé de produits en vrac à déverser d'un quai de rupture de charge, ledit portique comportant des éléments réglables (15, 16) formant des butées qui sont liés au portique pour limiter au moins le déplacement latéral de la benne, **caractérisé en ce que** le portique (7) est articulé sur les longerons du pont basculeur (1) sensiblement au niveau de l'avant du véhicule et pivote sous l'action de vérins (11) pour coiffer au moins une partie de la benne.

2. Portique de sécurité selon la revendication 1 **caractérisé en ce que** le portique (7) est articulé sur un cadre (10) fixé sous les longerons du pont (1).

3. Portique de sécurité selon la revendication 2 **caractérisé en ce que** le cadre (10) et le portique (7) sont déplaçables le long du pont (1).

4. Portique de sécurité selon la revendication 1 **caractérisé en ce que** les vérins (11) sont articulés sur une extrémité du cadre (10) et tourillonnent sur les jambes (8) du portique (7), sensiblement au tiers de sa hauteur.

5. Portique de sécurité selon la revendication 1 **caractérisé en ce que** les éléments réglables sont des butées (15) montées sur la traverse supérieure (14) du portique (7).

6. Portique de sécurité selon la revendication 1 **caractérisé en ce que** les éléments réglables sont des cales latérales (16) montées en partie haute sur les jambes (8) du portique (7) et orientées vers l'intérieur.

7. Portique de sécurité selon la revendication 6 **caractérisé en ce que** les cales (16) sont réglables en hauteur sur le portique et en largeur par rapport aux jambes pour modifier leur écartement l'une vis-à-vis de l'autre.

## Patentansprüche

1. Sicherheitsportalrahmen für einen Brückenkipper, der einen Muldenkippwagen aufnimmt oder jede Art von Strassenfahrzeug, das mit offenen Produkten zum Auskippen von einer Frachtentladerampe beladen ist, wobei der Portalrahmen einstellbare Elemente (15, 16) aufweist, welche Anschläge bilden, die am Portalrahmen angebracht sind, um zumindest das seitliche Verrücken des Wagenkastens in Grenzen zu halten, **dadurch gekennzeichnet, dass** der Portalrahmen (7) auf den Längsträgern des Brückenkippers (1) ungefähr in Höhe der Vorderseite des Fahrzeugs schwenkbar ist und sich unter der Einwirkung von Hebeböcken (11) um einen Zapfen dreht, um zumindest einen Teil des Wagenkastens zu überdecken.

2. Sicherheitsportalrahmen nach Anspruch 1, **dadurch gekennzeichnet, dass** der Sicherheitsportalrahmen (7) auf einem unter den Längsseiten der Brücke (1) angebrachten Rahmengestell (10) schwenkbar ist.

3. Sicherheitsportalrahmen nach Anspruch 2, **dadurch gekennzeichnet, dass** das Rahmengestell (10) und der Portalrahmen (7) längs der Brücke (1) verschiebbar sind.

4. Sicherheitsportalrahmen nach Anspruch 1, **dadurch gekennzeichnet, dass** die Hebeböcke (11) auf einem Außenrand des Rahmengestells (10) beweglich verbunden sind und auf den Streben (8) des Portalrahmens (7), etwa bei einem Drittel der Höhe, sich um einen Drehzapfen drehen.

5. Sicherheitsportalrahmen nach Anspruch 1, **dadurch gekennzeichnet, dass** die einstellbaren Elemente auf dem oberen Querträger (14) des Portalrahmens (7) angebrachte Anschläge (15) sind.

6. Sicherheitsportalrahmen nach Anspruch 1, **dadurch gekennzeichnet, dass** die einstellbaren Elemente am oberen Abschnitt der Streben (8) des Portalrahmens (7) angebrachte und nach innen gerichtete Seitenpassstücke (16) sind.

7. Sicherheitsportalrahmen nach Anspruch 6, **dadurch gekennzeichnet, dass** die Passstücke (16) auf dem Portalrahmen in der Höhe und bezüglich der Streben in der Breite verstellbar sind, um ihren gegenseitigen Abstand zu verändern.

## Claims

1. A safety gantry for a tipping bridge receiving a truck dump body or any type of road vehicle laden with loose products to be tipped out from a journey-breaking docking station, the said gantry comprising adjustable elements (15,16) forming stops (15,16) which are connected to the gantry to limit at least the lateral displacement of the dump body, **characterised in that** the gantry (7) is articulated to the longitudinal members of the tipping bridge (1) practically at the front of the vehicle and pivots under the action of rams (11) to cover at last part of the dump body.

2. A safety gantry according to claim 1, **characterised in that** the gantry (7) is articulated to a frame (10) fixed under the longitudinal members of the bridge (1).

3. A safety gantry according to claim 2, **characterised in that** the frame (10) and the gantry (7) are movable along the bridge (1).

4. A safety gantry according to claim 1, **characterised in that** the rams (11) are articulated to one end of the frame (10) and swivel on the legs (8) of the gantry (7) practically one third of the way along their height.

5. A safety gantry according to claim 1, **characterised in that** the adjustable elements are stops (15) mounted on the upper crosspiece (14) of the gantry (7).

6. A safety gantry according to claim 1, **characterised in that** the adjustable elements are lateral blocks (16) mounted on the upper part of the legs (8) of the gantry (7) and facing inwards.

7. A safety gantry according to claim 6, **characterised in that** the blocks (16) are adjustable in terms of height along the gantry and in terms of width with respect to the legs so as to alter their spacing with respect to each other.
